# EUROPEAN PATENT SPECIFICATION

(11) **EP 4 565 812 B1**
(45) Date of publication and mention of the grant of the patent: **02.09.2026**
(21) Application number: 23738503.4
(22) Date of filing: 04.07.2023
(51) Int. Cl.: F17C 9/02, B64D 37/30

(54) **HYDROGEN FUEL DELIVERY SYSTEM**
WASSERSTOFFBRENNSTOFFZUFUHRSYSTEM
SYSTÈME DE DISTRIBUTION DE CARBURANT HYDROGÈNE

(30) Priority: 04.08.2022 GB 202211357
(43) Date of publication of application: 11.06.2025
(73) Proprietor: Rolls-Royce plc, London N1 9FX (GB)
(72) Inventor: BACIC, Marko, Derby Derbyshire DE24 8BJ (GB)
(74) Representative: Rolls-Royce plc
(86) International application number: PCT/EP2023/068335
(87) International publication number: WO 2024/028016

(56) References cited:
- US-A- 5 107 906
- US-A- 6 079 222
- US-A1- 2016 230 931
- US-A1- 2022 099 299

## Description

### TECHNICAL FIELD

This disclosure relates to a hydrogen fuel delivery system and a method of operating a hydrogen fuel delivery system.

### BACKGROUND

The use of hydrogen as an alternative to liquid hydrocarbon fuels for aircraft propulsion poses technical problems. Given the low density of hydrogen in gaseous form, storing significant quantities requires either high pressures at ambient temperatures or storage at low pressures in liquid form at cryogenic temperatures. For aircraft applications, cryogenic storage is a more practical solution, given the ability to store larger quantities at low pressures and with reduced overall weight and volume. Providing a supply of gaseous fuel to generate energy, whether by way of a gas turbine or a fuel cell, requires the liquid fuel supply to be heated from cryogenic temperatures prior to being reacted or ignited. Additional and differently configured features and control systems are therefore required to control the supply of hydrogen fuel compared to those used for a conventional liquid hydrocarbon fuel such as kerosene.

US patent application publication 2022/0099299 A1 discloses a hydrogen fuel delivery system according to the pre-characterising portion of claim 1. US patent 6079 222 discloses a similar system for delivery of gaseous nitrogen, oxygen, methane, propane, ammonia etc from a cryogenic store of liquefied gas. Neither system has suitable means for controlling the temperature at which gas is delivered, such as would be required in the application of such a system to the supply of gaseous hydrogen to a propulsive hydrogen-burning gas turbine engine comprised in an aircraft, for example.

### BRIEF SUMMARY

In accordance with a first aspect there is provided a hydrogen fuel delivery system comprising:
a fuel line having an inlet and an outlet;
a liquid fuel pump configured to provide a flow of liquid hydrogen fuel from a hydrogen fuel storage tank to the inlet of the fuel line;
a heat exchanger having first and second fluid paths, the fuel line including the first fluid path; and
a pre-heater line having an inlet connected to the fuel line between the inlet thereof and the heat exchanger, the pre-heater line comprising a first control valve and a burner between the inlet of the pre-heater line and the heat exchanger, the pre-heater line including the second fluid path of the heat exchanger towards a pre-heater line outlet and the first control valve being disposed in the pre-heater line between the inlet thereof and the burner;
characterised in that the hydrogen fuel delivery system further comprises
a first temperature sensor configured to measure a first fuel temperature in the fuel line between the heat exchanger and the outlet of the fuel line; and
a control system configured to provide a control signal to control operation of the first control valve dependent on a comparison of the first fuel temperature with a target value of the first fuel temperature and on a measure of fuel flow through the pre-heater line.

The hydrogen fuel delivery system may further comprise:
a first pressure sensor configured to measure a first fuel pressure in the pre-heater line between the inlet of the pre-heater line and the first control valve;
a second pressure sensor configured to measure a second fuel pressure in the pre-heater line between the first control valve and the burner; and
a second temperature sensor configured to measure a second fuel temperature in the pre-heater line between the inlet thereof and the first control valve,
wherein the control system is configured to derive the measure of fuel flow from the first and second fuel pressures and the second fuel temperature.

The control system may comprise a first look-up table configured to output the measure of fuel flow dependent on the first and second fuel pressures, the first fuel temperature and the control signal.

The hydrogen fuel delivery system may comprise a mass flow meter configured to measure a mass flow rate of fluid in the pre-heater line and provide a corresponding measure of fuel flow through the pre-heater line to the control system.

The control system may comprise a first control loop and a second control loop, the first control loop being arranged to receive the measure of fuel flow through the pre-heater line and an output from the second control loop and to output the control signal, the second control loop being arranged to receive the target value of the first fuel temperature and the first fuel temperature and to provide the output of the second control loop to the first control loop.

The first control loop may be configured to determine a first difference between the measure of fuel flow through the pre-heater line and the output of the second control loop and to output the first control signal.

The second control loop may be configured to determine a second difference between the target value of the first fuel temperature and the first fuel temperature and provide the output of the second control loop to the first control loop.

The hydrogen fuel delivery system may further comprise an electrical heater in the pre-heater line between the inlet thereof and the burner, the electrical heater being configured to receive a heater current to heat fuel in the pre-heater line. The electrical heater may be disposed between the inlet of the pre-heater line and the first control valve. The control system may be configured to control the heater current dependent on the measure of fuel flow through the pre-heater line. The control system may comprise a second look-up table configured to receive the measure of fuel flow through the pre-heater line and to output the heater current.

The control system may further comprise a third look-up table configured to receive a measure of the speed of the liquid fuel pump, a pressure of the fuel at the outlet of the pump, the first fuel temperature and the target value of the first fuel temperature and to provide a feed forward control signal to the first control loop.

The hydrogen fuel delivery system may further comprise a second control valve disposed in the fuel line between the heat exchanger and the outlet of the fuel line, the first temperature sensor being arranged to measure the first fuel temperature in the fuel line between the heat exchanger and the second control valve.

According to a second aspect there is provided an aircraft propulsion system comprising:
a hydrogen fuel storage tank;
a hydrogen fuel delivery system according to the first aspect; and
a gas turbine engine,
wherein the fuel line outlet is connected to provide a supply of hydrogen fuel to a combustor of the gas turbine engine.

According to a third aspect there is provided an aircraft comprising the aircraft propulsion system of the second aspect.

According to a fourth aspect there is provided a method of operating a hydrogen fuel delivery system which comprises:
a fuel line having an inlet and an outlet;
a liquid fuel pump configured to provide a flow of liquid hydrogen fuel from a hydrogen fuel storage tank to the inlet of the fuel line;
a heat exchanger having first and second fluid paths, the fuel line including the first fluid path; and
a pre-heater line having an inlet connected to the fuel line between the inlet thereof and the heat exchanger, the pre-heater line comprising a first control valve and a burner between the pre-heater line inlet and the heat exchanger, the pre-heater line including the second fluid path of the heat exchanger towards a pre-heater line outlet and the first control valve being disposed in the pre-heater line between the inlet thereof and the burner;
characterised by the steps of:
   (i) measuring a first fuel temperature in the fuel line between the heat exchanger and the outlet of the fuel line; and
   (ii) generating control signal to control operation of the first control valve dependent on a comparison of the first fuel temperature with a target value of the first fuel temperature and on a measure of fuel flow through the pre-heater line.

The method may further comprise the steps of:
(a) measuring a first fuel pressure in the pre-heater line between the inlet thereof and the first control valve;
(b) measuring a second fuel pressure in the pre-heater line between the first control valve and the burner;
(c) measuring a first fuel temperature in the pre-heater line between the inlet thereof and the first control valve;
(d) deriving the measure of fuel flow through the pre-heater line from the first and second fuel pressures and the second fuel temperature.

Step (d) may be carried out by using a first look-up table that outputs the measure of fuel flow through the pre-heater line dependent on the first and second fuel pressures, the first fuel temperature and the control signal.

The method may further comprise the step of using a mass flow meter to measure a mass flow rate of fluid in the pre-heater line to obtain the measure of fuel flow through the pre-heater line.

The step (ii) of generating the control signal may comprise the steps of:
(1) generating the comparison by determining a first difference between the first fuel temperature and the target value of the first fuel temperature and enerating a first signal corresponding to the first difference;
(2) generating a second signal corresponding to the measure of fuel flow through the pre-heater line; and
(3) generating the control signal by determining a second difference between the first and second signals.

If the hydrogen fuel delivery system further comprises an electrical heater in the pre-heater line between the inlet thereof and either the burner or the first control valve, the electrical heater receiving a heater current to heat fuel in the pre-heater line, the method may further comprise the step of controlling the heater current dependent on the measure of fuel flow through the pre-heater line. This step may comprise using a second look-up table to receive the measure of fuel flow and output the heater current.

A third look-up table may be used to receive a measure of the speed of the liquid fuel pump, the pressure of the fuel at the outlet of the pump, the first temperature and the target value of the first temperature and to provide a feed forward control signal.

If the hydrogen fuel delivery system comprises a second control valve disposed in the fuel line between the outlet thereof the heat exchanger, the method may further comprises the step of controlling the second control valve.

### BRIEF DESCRIPTION OF THE DRAWINGS

Embodiments are described below by way of example only and with reference to the accompanying drawings, which are purely schematic and not to scale, and in which:
- Figure 1: is a schematic diagram of an example hydrogen-fuelled airliner comprising hydrogen-fuelled turbofan engines;
- Figure 2: is a schematic diagram illustrating flow of hydrogen fuel from a storage tank to a turbofan engine;
- Figure 3: is a schematic diagram of an example hydrogen fuel delivery system;
- Figure 4: is a schematic diagram of an example control system for the hydrogen fuel delivery system of Figure 3;
- Figure 5: is a schematic diagram of an example fuel pump speed control system;
- Figure 6: is a schematic diagram of an example fuel valve control system;
- Figure 7: is a schematic diagram of an alternative example control system for the hydrogen fuel delivery system of Figure 3;
- Figure 8: is a schematic diagram of an example engine electronic controller (EEC);
- Figure 9: is a schematic diagram illustrating a relationship between fuel pump speed and engine speed demand; and
- Figure 10: is a schematic diagram of an example burner air inlet valve control system.

### DETAILED DESCRIPTION

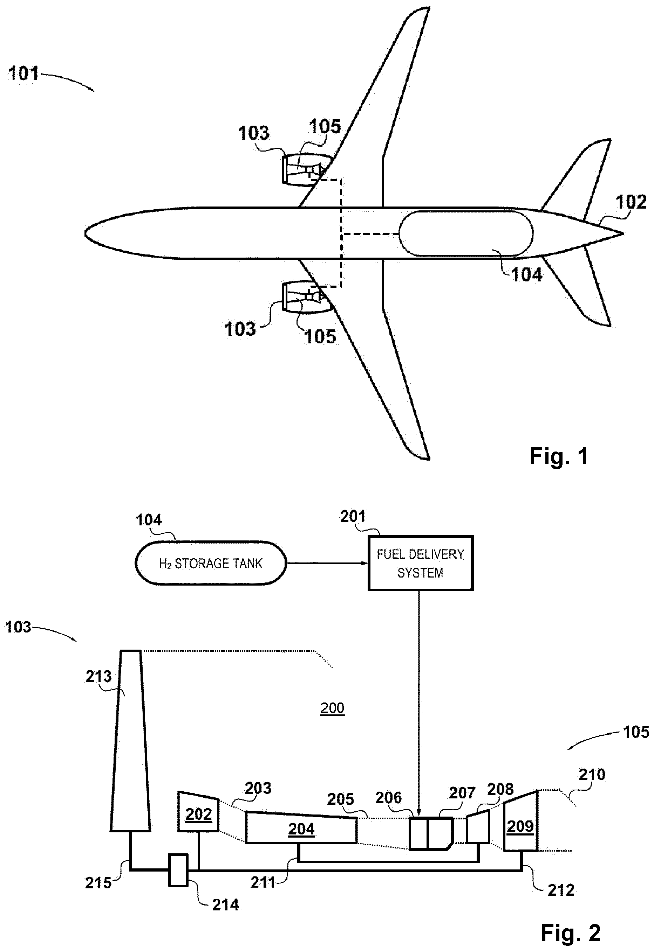

A hydrogen-fuelled airliner is illustrated in Figure 1. In this example, the airliner 101 is of substantially conventional tube-and-wing twinjet configuration with a central fuselage 102 and substantially identical underwing-mounted turbofan engines 103. The turbofan engines 103 may for example be geared turbofan engines.

A hydrogen storage tank 104 located in the fuselage 104 for a hydrogen fuel supply is connected with core gas turbines 105 in the turbofan engines 103 via a fuel delivery system. In the illustrated example, the hydrogen storage tank 104 is a cryogenic hydrogen storage tank that stores the hydrogen fuel in a liquid state, in a specific example at 20 K. The hydrogen fuel may be pressurised to between around from 1 to 3 bar, for example around 2 bar.

A schematic block diagram illustrating the flow of hydrogen fuel to a gas turbine engine is shown in Figure 2, which illustrates an example aircraft propulsion system 200. Hydrogen fuel is obtained from a hydrogen storage tank 104 by a fuel delivery system 201 and is supplied to a core of a gas turbine 105. Only one of the gas turbines is shown for clarity. In this illustrated embodiment, the gas turbine 105 is a simple cycle gas turbine engine. In other embodiments, complex cycles may be implemented via fuel-cooling of the gas path.

Referring again to Figure 2, the gas turbine 105 comprises, in axial flow series, a low-pressure compressor 202, an interstage duct 203, a high-pressure compressor 204, a diffuser 205, a fuel injection system 206, a combustor 207, a high-pressure turbine 208, a low-pressure turbine 209 and a core nozzle 210. The fuel injection system 206 may be a lean direct fuel injection system. The high-pressure compressor 204 is driven by the high-pressure turbine 208 via a first shaft 211 and the low-pressure compressor 202 is driven by the low-pressure turbine 209 via a second shaft 212. In alternative examples, the gas turbine 105 may comprise more than two shafts.

In a geared turbofan engine the low-pressure turbine 209 also drives a fan 213 via a reduction gearbox 214. The reduction gearbox 214 receives an input drive from the second shaft 212 and provides an output drive to the fan 213 via a fan shaft 215. The reduction gearbox 214 may be an epicyclic gearbox, which may be of planetary, star or compound configuration. In further alternatives, the reduction gearbox 214 may be a layshaft-type reduction gearbox or another type of reduction gearbox. It will also be appreciated that the principles disclosed herein may be applied to a direct-drive type turbofan engine, i.e. in which there is no reduction gearbox between the low-pressure turbine 209 and the fan 213.

In operation, the fuel delivery system 201 is configured to obtain liquid hydrogen fuel from the cryogenic hydrogen storage tank 104 and provide the fuel to the fuel injection system 206 in gaseous form. This requires the amount of liquid fuel from the tank 104 to be controlled and a controlled amount of heat provided to the fuel to ensure the fuel in gaseous form is at a required temperature prior to injection into the gas turbine 105, or in alternative arrangements into a hydrogen fuel cell.

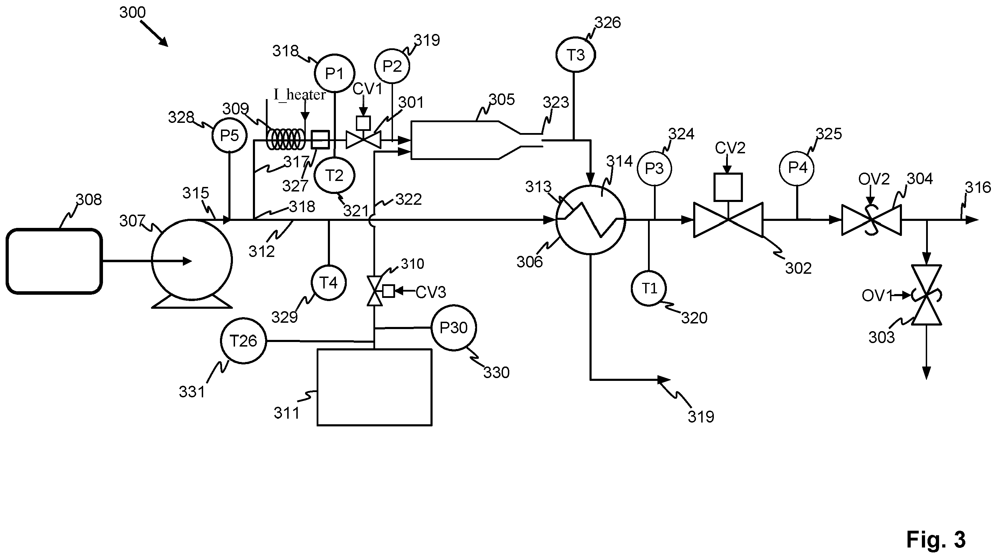

Figure 3 is a block diagram illustrating an example fuel delivery system 300 in greater detail. The fuel delivery system 300 comprises a cryogenic fuel storage tank 308 providing a supply of liquid fuel to a liquid fuel pump 307. The liquid fuel pump 307 is configured to provide a flow of liquid hydrogen fuel from the cryogenic storage tank 308 to a fuel line 312. The fuel line 312 has an inlet 315 at the liquid fuel pump 307 and an outlet 316 for providing gaseous fuel to a gas turbine and/or fuel cell.

A heat exchanger 306 having first and second fluid paths 313, 314 is provided to exchange heat between fluids passing along the first and second fluid paths 313, 314. The fuel line 312 passes through the first fluid path 313 and is heated by exchanging heat with fluid passing through the second fluid path 314.

A pre-heater line 317 has an inlet 318 that is connected to the fuel line 312 between the fuel line inlet 315 and the heat exchanger 306. The pre-heater line 317 is arranged to extract a controlled amount of fuel from the fuel line 312 that is then combusted to provide pre-heating to fuel flowing through the fuel line 312. The pre-heater line 317 comprises a first control valve 301 and a burner 305 arranged in series between the pre-heater line inlet 318 and the heat exchanger 306. Fuel in the pre-heater line 317 passes through the first control valve 301 and into the burner 305, where the fuel is combusted with air provided from an air source 311 via an air supply line 322. The air source 311 may for example be a compressor or bypass of the gas turbine engine. The resulting combusted fuel passes from an exhaust 323 of the burner 305 into the second fluid path 314 of the heat exchanger 306 and towards an outlet 319, which may connect to a bypass of the gas turbine engine.

The purpose of the pre-heater line 317 is to regulate the temperature T1 of the gaseous fuel (within acceptable bounds), as measured by a first temperature sensor 321, entering the second control valve 302. This is achieved by controlling the amount of cryogenic fuel passing through the pre-heater line 317 via the first control valve 301 whilst maintaining operability of the pre-heater and not exceeding limits.

The burner 305 and heat exchanger 306 may be separate components connected by the pre-heater line 317 or may be integrated, optionally together with the first control valve 301 and/or the electrical heater 309.

An electrical heater 309 may be provided in the pre-heater line 317 between the pre-heater line inlet 318 and the burner 305, the electrical heater 309 configured to receive a heater current I_heater to heat fuel in the pre-heater line 317 prior to entering the burner 305. The electrical heater 309 may be located between the first control valve 301 and the burner 305 or may alternatively be located between the pre-heater line inlet 318 and the first control valve 301, as in the example in Figure 3. An advantage of locating the electrical heater 309 before rather than after the first control valve 301 is that the first control valve 301 may then not need to operate at cryogenic temperatures.

A second control valve 302 is provided in the fuel line 312 between the heat exchanger 306 and the fuel line outlet 316. The second control valve 302 controls a flow of fuel, now in gaseous form after being heated by passing through the heat exchanger 306, to the outlet 316. One or more other valves 304, 303 may also be provided. A first overspeed valve 303 may be a solenoid overspeed vent valve, controlled by a first on/off control signal OV1. A second overspeed valve 304 may be a solenoid overspeed shut-off valve, controlled by a second on/off control signal OV2.

During normal operation, the first overspeed valve 303 is closed and the second overspeed valve 304 is open, allowing fuel from the fuel line 312 to flow through to the gas turbine or fuel cell. In the case of an engine overspeed or shaft break scenario, the pump 307 is turned off, the first overspeed valve 303 is opened to vent fuel from the fuel line 312 and the second overspeed valve 304 is closed to stop fuel from passing through to the gas turbine.

The position of each of the control valves 301, 302 may be controlled through use of a position measuring device such as an LVDT or RVDT (a linear or rotary variable differential transformer) in combination with a motor to drive the valve to the required position. The values CV1, CV2 may therefore represent the demand signal provided to each control valve 301, 302, the position of which is controlled by a control loop within the control valve that drives the motor to the demanded position.

The pump 307 may be controlled by controlling the speed of a motor driving the pump 307, for example by receiving a signal indicating a desired pump speed Np and outputting currents at the required current, frequency and relative phases to coils of an electric motor driving the pump 307.

Operation of the fuel delivery system 300 is controlled using various pressure and temperature measurements. A first pressure sensor 318 is configured to measure a first fuel pressure P1 in the pre-heater line 317 between the pre-heater line inlet 318 and the first control valve 301. The first pressure sensor 318 may be in the fuel line 312 or in the part of the pre-heater line 317 between the fuel line 312 and the first control valve 301 and will typically measure a pressure of the fuel in supercritical form as it exits the liquid fuel pump 307. A second fuel pressure sensor 319 is configured to measure a second fuel pressure P2 in the pre-heater line 317 between the first control valve 301 and the burner 305. A first temperature sensor 320 measures a first fuel temperature T1 in the fuel line 312 between the heat exchanger 306 and the second control valve (302). A second temperature sensor 321 in the pre-heater line 317 between the pre-heater line inlet 318 and the first control valve 301 measures a temperature T2 of fuel passing through the pre-heater line 317 into the first control valve 301. A difference between the first and second fuel pressures P1, P2 in combination with the second fuel temperature T2 can be used to determine a flow of fuel through the first control valve 301. Alternatively, or additionally, a mass flow meter 327 may be provided in the pre-heater line 317 between the pre-heater line inlet 318 and the first control valve 301, the mass flow meter 327 configured to measure a mass flow rate of fluid in the pre-heater line 317 and provide a measure of fuel flow to a control system for operating the fuel delivery system 300, as described in further detail below.

The fuel delivery system 300 is controlled such that the first fuel temperature T1 reaches, or is maintained at or around, a desired target temperature T1_{Target}.

A third pressure sensor 324 may be configured to measure a third fuel pressure P3 in the fuel line 312 between the heat exchanger 306 and the second control valve 302. A fourth pressure sensor 325 may be configured to measure a fourth fuel pressure P4 in the fuel line 312 between the second control valve 302 and the fuel line outlet 316. Knowledge of the first fuel temperature T1 and the third and fourth fuel pressures P3, P4 enables a measure of fuel flow to be determined through the second control valve 302, as described in further detail below.

A third temperature sensor 326 may be configured to measure a burner exhaust gas temperature T3.

A fourth temperature sensor 329 may be configured to measure a temperature T4 of fuel flowing in the fuel line 312 between the fuel pump 307 and the first fluid path 313 of the heat exchanger 306.

A fifth pressure sensor 328 may be configured to measure a pressure of fuel in the fuel line 312 at the fuel pump outlet 315.

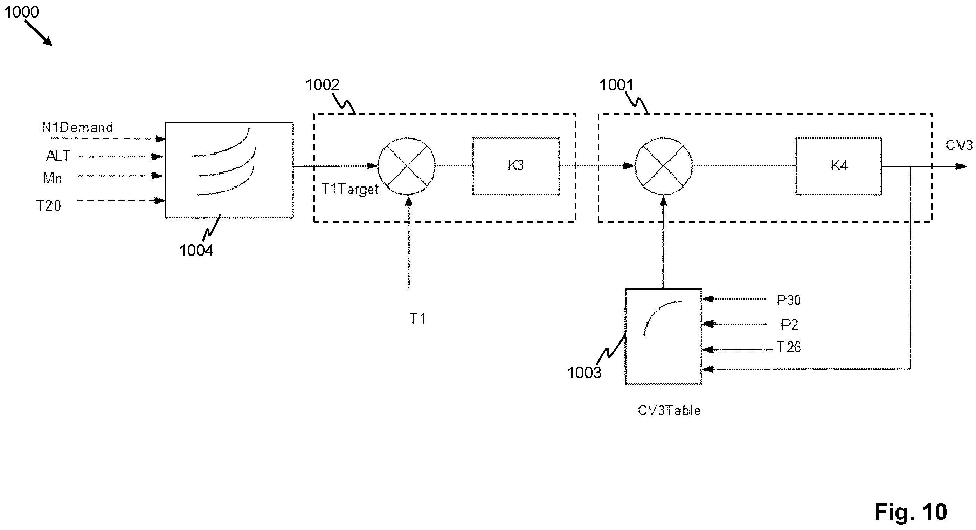

A third control valve 310 may be provided in the air supply line 322 to control the amount of air provided to the burner 305 and hence through a heat exchanger 306. The third control valve 310 may be controlled with a control signal CV3 by a separate control loop dependent on the measured fuel flow rate through the pre-heater line 317. An example control system for the control valve 310 is illustrated in Figure 10, described in further detail below. Control of the third control valve 310 may be used to keep the metal temperature of the heat exchanger 306 above freezing. An alternative arrangement is that the exit temperature T3 from the burner 305 may be set to a constant value (for example around 1000K) or according to a schedule (T3_{target}). The control signal CV3 provided to the valve 310 can then be used to regulate the exit temperature T1 of the Heat Exchanger 306 according to the appropriate schedule (T1_{target}).

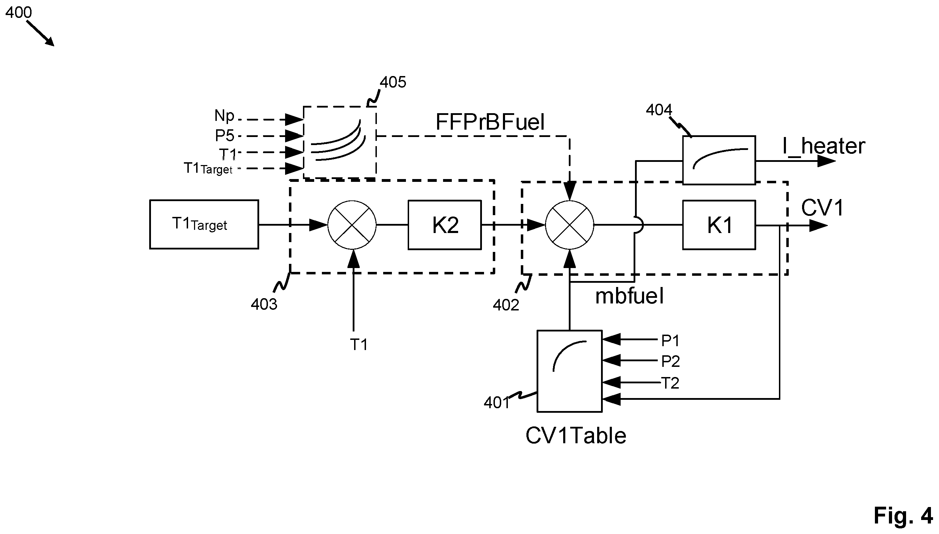

Operation of the fuel delivery system 300 is controlled by a control system, an example of which is illustrated in Figure 4. The control system 400 is configured to receive the first and second pressures P1, P2 and first and second fuel temperatures T1, T2 from the pressure sensors 318, 319 and temperature sensors 320, 321 and to provide a first control signal CV1 to control operation of the first control valve 301 dependent on an input target temperature T1_{Target}.

The control system 400 comprises a first look-up table 401, which takes as inputs the first and second fuel pressures P1, P2, the second fuel temperature T2 and the current value of the first control signal CV1 provided to the first control valve 301. The first look-up table 401 outputs a fuel flow measure mbfuel dependent on the inputs P1, P2, T2 and CV1, which is provided to a first control loop 402. In alternative arrangements, the fuel flow measure mbfuel may be provided from a mass flow meter 327 in the pre-heater line 317 in place of the first look-up table 401. The first, or inner, control loop 402 takes the mbfuel input together with an output from a second, or outer, control loop 403 and provides a value for CV1 from controller K1. The second control loop 403 takes inputs T1 and T1_{Target}, i.e. the measured fuel temperature T1 between the heat exchanger 306 and the second control valve 302, and the target temperature T1_{Target}, and provides an output to the first control loop 402 from controller K2 dependent on a difference between T1 and T1_{Target}. The output from controller K2 of the second control loop 403 is compared with the fuel flow measure mbfuel in the first control loop 401 and controller K1 provides the output control signal CV1 for the first control valve 301. The controllers K1, K2 in the first and second control loops 402, 403 are typically PID controllers.

The output mbfuel may also be used to control a current supplied to the electrical heater 309, if present. A second look-up table 404 takes as an input the mbfuel output from the first look-up table 401 (or from the mass flow meter 327) and outputs the heater current I_heater that controls the current provided to the electrical heater 309. The heater current supplied will increase as the fuel flow measure increases but this may be a non-linear relationship, which the second look-up table 404 can be configured to represent. The heater current may alternatively be controlled by switching the current between on and off states, with an on/off duty cycle determining the average power supplied to the heater 309.

The mass flow rate *ṁ* through a valve can be characterised as a function of the upstream pressure Pᵤₚ, downstream pressure P_{down}, upstream temperature Tᵤₚ and valve flow area A: $\dot{m} = f \left({P}_{up}, \sqrt{{T}_{up}}, {P}_{down}, A\right)$

The valve flow area (accounting for discharge coefficient) depends for a control valve on the valve demanded position, i.e. varying from 0 to Aₘₐₓ.

This characteristic can either be computed in real-time using compressible flow equations (known to people skilled in the art) or can be stored as a map in ROM and values referenced through a look-up function. The first look-up table 401 stores the relationship for the applicable pressure and temperature ranges and outputs a value for the fuel mass flow rate mbfuel accordingly. An advantage of using a look-up table rather than a mass flow meter is that a meter capable of measuring to the required accuracy and under the required conditions will tend to be considerably more costly than using pressure and temperature sensors in combination with a look-up table.

The first control loop 402 is used to set the value of CV1 to set the position of the first control valve 301 to deliver the target fuel temperature T1_{Target} set by the second control loop 403. The current fuel mass flow is estimated using the mass flow table estimate through the first control valve position CV1 and measured system parameters P1, P2, T2 (or by means of mass flow meter 327 measurement if present). The second control loop 403 sets the amount of fuel to deliver the target temperature T1_{Target}. Both control loops 402, 403 will also generally need to comprise anti-windup logic to ensure that they operate within defined limits such as maintaining a minimum and/or maximum fuel to air ratio for the burner system 305 derived from known requirements of factors such as lean and rich mixtures and blow out.

To provide an improved transient response, a feed-forward input may also be incorporated into the control system 400, as shown by the third look-up table 405 in Figure 4. The pump speed Np, input fuel pressure P5, as measured by fifth pressure sensor 328 at the fuel pump outlet 315, the first fuel temperature T1 and the target temperature T1_{Target} may be input to the third look-up table 405, which provides a precalculated value for the pre-burner fuel flow FFPrBFuel that is required to deliver the target temperature, taking into account the effectiveness of the heat exchanger 306.

The fuel pump volumetric flow rate Q is proportional to the pump speed Np and the fuel pump pressure rise is proportional to Np². The fuel pump 307 may comprise a single pump driven by a single electrical motor, or may be multiple pumps each driven by an electrical motor or alternatively driven off a gearbox coupled to the one of the gas turbine spools. Full flight envelope analysis may be used to determine the required mass flow rate *ṁₕ₂* (which is controlled by the second control valve 302) for the fuel delivery system in order for the propulsion system to generate required thrust across the flight envelope. The minimum required fuel delivery pressure at the outlet of the fuel pump 307 at an engine thrust will be determined by a desired operating pressure ratio of the combustor fuel nozzle, the fuel metering valve 302, the pre-heater system, and other components downstream of the fuel pump 307 as well as the fuel pump efficiency curve. The desired thrust will govern the minimum pressure rise the fuel pump 307 needs to provide. Therefore at a given thrust, the mass flow and fuel delivery pressure requirements can be expressed as a function of a number of parameters or combinations thereof, an example of which may be defined as ${m}_{h 2}^{⋅} = {f}_{1} \left(ALT, Mn, \frac{N 1 demand}{\sqrt{T 20}}\right)$ ${P}_{1} = {f}_{2} \left(ALT, Mn, \frac{N 1 demand}{\sqrt{T 20}}\right)$ where N1 demand is the controlling target fan speed from the aircraft flight control system (for example as viewed by the aircraft flight control system as the engine thrust setting), ALT is the altitude, Mn is Mach number and T20 is the fan inlet temperature.

Other parametrisations may also be possible, such as ${m}_{h 2}^{⋅} = {g}_{2} \left(P20,T20,N1demand\right)$$P 1 = {g}_{2} \left(P30\right)$ where P20 is the fan inlet pressure and P30 the high pressure compressor outlet pressure.

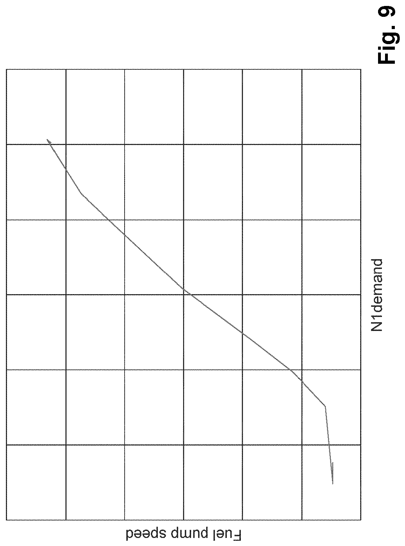

The fuel pump speed may thereby be controlled to achieve a desired fuel pressure level P5 according to a demanded engine thrust level (N1demand) from the aircraft by taking into account engine inlet conditions (if necessary). An example of a relationship between fuel pump pressure and N1demand is illustrated schematically in Figure 9. As the engine thrust demand increases, the fuel pump speed increases but the relationship is not linear and is not uniform.

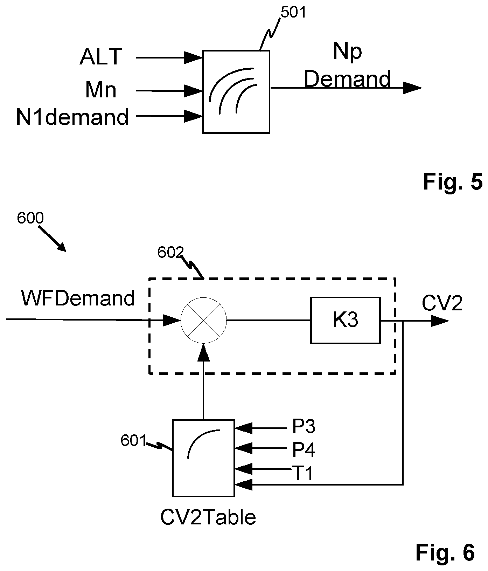

Figure 5 illustrates an example liquid fuel pump control logic in the form of a look-up table 501 taking as inputs altitude ALT, Mach number Mn and engine thrust demand N1demand and providing as an output a demand signal Npdemand for the liquid fuel pump 307. The demand signal is then provided to a speed control loop for controlling the liquid fuel pump 307. The look-up table 501 incorporates the relationship between N1demand and Np, for example as illustrated in Figure 9.

The gaseous control valve 302 (Figure 3) is the main fuel metering valve for the system 300. The objective of controlling the valve 302 is to control the amount of gaseous hydrogen into the combustor. Figure 6 illustrates a control system 600 that is configured to provide a control signal CV2 for the second control valve 302. The control system 600 comprises a look-up table 601 and a control loop 602. The look-up table 601 takes as inputs third and fourth fuel pressures P3, P4 from the third and fourth fuel pressure sensors 324, 325, the first fuel temperature T1 from the first temperature sensor 320 and the control signal CV2. The look-up table 601 outputs a measure of fuel flowing through the second control valve 302 and provides this to the control loop 602, which compares the measure of fuel to the fuel demand signal WFDemand and outputs the control signal CV2 for controlling the second control valve 321. The fuel demand signal may be obtained via a model such as that described in US 5,083,277. The look up table 601 can be replaced with compressible flow equations known to people skilled in the art if this is advantageous to save memory space of the lookup table.

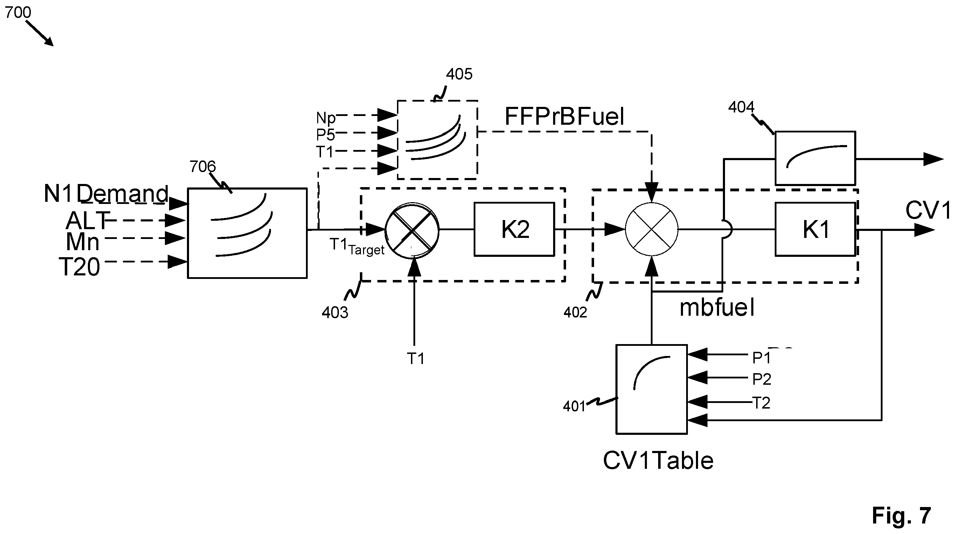

To ensure adequate operation of the fuel delivery system it is important that the heat exchanger does not ice up under any conditions. A flight idle condition for example could lead to icing if the controlling target is not set correctly. One way to avoid this is to set the target fuel temperature T1_{Target} dependent on flight conditions and effective thrust. Figure 7 illustrates an example control system 700 in which this is implemented by adding a fourth look-up table 706 to the control system as described above in relation to Figure 4. The output T1_{Target} from the fourth look-up table 706 is obtained from inputs N1Demand, ALT, Mn and T20 (as defined above). The predefined outputs may be derived by making use of fundamental heat exchanger equations (such as the Number of Transfer Units (NTU) method) to work out the metal temperature of the heat exchanger at a given set of conditions. Whilst this approach may work, is not necessarily able to deal with transient behaviour. An alternative approach may be to use an observer (such as a Kalman filter) that estimates the current metal temperature of the heat exchanger, taking into account thermal dynamics of the heat exchanger, and instead controlling to THxMetal (output of observer estimate of the metal temperature) to be above 0°C. In a general aspect therefore, the control system 700 may be configured to maintain the first fuel temperature T1 above a minimum temperature to prevent icing of the heat exchanger 306, i.e. to maintain a metal temperature of the heat exchanger THxMetal to above 0°C. The control system 700 may be configured to control the fuel temperature T1 based on a "Lowest-wins" criterion between T1 and the heat exchanger metal temperature THxMetal. The controller 700 may be a predictive controller that contains a number of explicit constraints on T1, THxMetal and other temperatures in the system 700.

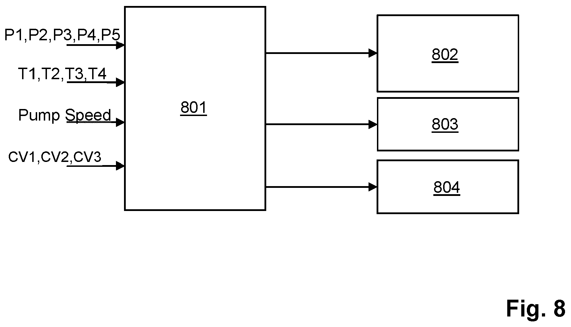

The above-described control systems may be incorporated in an engine electronic controller (EEC) 801, as shown schematically in Figure 8. The EEC 801 takes as inputs the various fuel pressures P1, P2, P3, P4, P5, temperatures T1, T2, T3, T4, pump speed Np and valve positions CV1, CV2, CV3 and outputs control signals to a pump controller 802, valve controllers 803 and an electrical heater controller 804 to operate the fuel delivery system 300.

An example control system 1000 for providing a control signal CV3 to the third control valve, or burner air inlet valve, 310, is illustrated in Figure 10. The control system 1000 comprises first and second control loops 1001, 1002 and first and second look-up tables 1003, 1004. The first look-up table 1003 receives pressure P30 from pressure sensor 330 in the air supply line inlet, pressure P2 from pressure sensor 319 in the burner inlet and temperature T26 from temperature sensor 331 in the air supply inlet. Pressure P30 may be the pressure at the end of the HP compressor 204 (Figure 2) and temperature T26 may be the temperature at the inlet of the HP compressor 204 and outlet of the LP compressor 202. These may be measured in the engine or could be measured by dedicated sensors upstream of control valve 310. Similar to the look-up table 401 of the control system 400 of Figure 4, the look-up table 1001 outputs a measure of mass flow rate through control valve 310.

The second look-up table 1004 takes inputs N1Demand, ALT, Mn and T20 and outputs an input target temperature T1_{Target} to the second control loop 1002, and is similar to look-up table 706 in Figure 7, described above.

First and second control loops 1001, 1002 operate similarly to control loops 402, 403 described above, i.e. comparing input values and providing an output control signal CV3. The second control loop 1002 compares T1 with T1Target and controller K3 provides an input to the first control loop 1001, which compares the input to an output from the first look-up table 1003 and controller K4 provides the control signal CV3 output.

## Claims

1. A hydrogen fuel delivery system (300) comprising:
a fuel line (312) having an inlet (315) and an outlet (316);
a liquid fuel pump (307) configured to provide a flow of liquid hydrogen fuel from a hydrogen fuel storage tank (308) to the inlet (315) of the fuel line;
a heat exchanger (306) having first and second fluid paths (313, 314), the fuel line (312) including the first fluid path (313); and
a pre-heater line (317) having an inlet (318) connected to the fuel line (312) between the inlet (315) thereof and the heat exchanger (306), the pre-heater line (317) comprising a first control valve (301) and a burner (305) between the inlet (318) of the pre-heater line and the heat exchanger (306), the pre-heater line (317) including the second fluid path (314) of the heat exchanger (306) towards a pre-heater line outlet (319) and the first control valve being disposed in the pre-heater line between the inlet thereof and the burner;
**characterised in that** the hydrogen fuel delivery system further comprises
a first temperature sensor (321) configured to measure a first fuel temperature (T1) in the fuel line (312) between the heat exchanger (306) and the outlet of the fuel line; and
a control system (400) configured provide a control signal (CV1) to control operation of the first control valve (301) dependent on a comparison of the first fuel temperature (T1) with a target value (T1_{Target}) of the first fuel temperature and on a measure (mbfuel) of fuel flow through the pre-heater line (317).

2. A hydrogen fuel delivery system (300) according to claim 1, comprising:
a first pressure sensor (318) configured to measure a first fuel pressure (P1) in the pre-heater line (312) between the inlet (318) thereof and the first control valve (301);
a second pressure sensor (319) configured to measure a second fuel pressure (P2) in the pre-heater line (317) between the first control valve (301) and the burner (305); and
a second temperature sensor (321) configured to measure a second fuel temperature (T2) in the pre-heater line (312) between the inlet (318) thereof and the first control valve (301),
wherein the control system (400) is configured to derive the measure (mbfuel) of fuel flow from the first and second fuel pressures (P1, P2) and the second fuel temperature (T2) and optionally comprises a first look-up table (401) configured to output the measure (mbfuel) of fuel flow dependent on the first and second fuel pressures (P1, P2), the first fuel temperature (T1) and the control signal (CV1).

3. A hydrogen fuel delivery system (300) according to claim 1, comprising a mass flow meter (327) configured to measure a mass flow rate of fluid in the pre-heater line (317) and provide a corresponding measure of fuel flow (mbfuel) through the pre-heater line to the control system (400).

4. A hydrogen fuel delivery system (300) according to any preceding claim, wherein the control system (400) comprises a first control loop (402) and a second control loop (403), the first control loop (402) being arranged to receive the measure (mbfuel) of fuel flow through the pre-heater line and an output from the second control loop (403) and to output the control signal (CV1), and the second control loop (403) being arranged to receive the target value (T1_{Target}) of the first fuel temperature and the first fuel temperature (T1) and to provide the output of the second control loop to the first control loop (402).

5. A hydrogen fuel delivery system (300) according to claim 4, wherein:
(a) the first control loop (402) is configured to determine a first difference between the measure (mbfuel) of fuel flow through the pre-heater line and the output of the second control loop (403) and to output the control signal (CV1); and/or
(b) the second control loop (403) is configured to determine a second difference between the first fuel temperature (T1) and the target value (T1_{Target}) of the first fuel temperature and provide the output of the second control loop to the first control loop (402).

6. A hydrogen fuel delivery system (300) according to any preceding claim further comprising an electrical heater (309) in the pre-heater line (317) between the inlet (318) thereof and the burner (305), the electrical heater (309) being configured to receive a heater current (I_heater) to heat fuel in the pre-heater line (317).

7. A hydrogen fuel delivery system (300) according to claim 6, wherein:
(a) the electrical heater (309) is disposed between the inlet (318) of the pre-heater line and the first control valve (301); and/or
(b) the control system (400) is configured to control the heater current (I_heater) dependent on the measure (mbfuel) of fuel flow through the pre-heater line and optionally comprises a second look-up table (404) configured to receive the measure (mbfuel) of fuel flow through the pre-heater line and to output the heater current (I_heater).

8. A hydrogen fuel delivery system (300) according to any preceding claim, wherein the control system (400) further comprises a third look-up table (405) configured to receive a measure of the speed (Np) of the liquid fuel pump (307), a pressure (P5) of the fuel at the outlet (315) of the pump, the first fuel temperature (T1) and the target value (T1_{Target}) of the first fuel temperature and to provide a feed forward control signal (FFPrBFuel) to the first control loop (402).

9. A hydrogen fuel delivery system according to any preceding claim further comprising a second control valve (302) disposed in the fuel line between the heat exchanger and the outlet of the fuel line and wherein the first temperature sensor is arranged to measure the first fuel temperature (T1) in the fuel line between the heat exchanger and the second control valve.

10. A method of operating a hydrogen fuel delivery system (300) which comprises:
a fuel line (312) having an inlet (315) and an outlet (316);
a liquid fuel pump (307) configured to provide a flow of liquid hydrogen fuel from a hydrogen fuel storage tank (308) to the inlet (315) of the fuel line;
a heat exchanger (306) having first and second fluid paths (313, 314), the fuel line (312) including the first fluid path (313); and
a pre-heater line (317) having an inlet (318) connected to the fuel line (312) between the inlet (315) thereof and the heat exchanger (306), the pre-heater line (317) comprising a first control valve (301) and a burner (305) between the inlet (318) of the pre-heater line and the heat exchanger (306), the pre-heater line (317) including the second fluid path (314) of the heat exchanger (306) towards a pre-heater line outlet (319) and the first control valve being disposed in the pre-heater line between the inlet thereof and the burner;
**characterised by** the steps of:
(i) measuring a first fuel temperature (T1) in the fuel line (312) between the heat exchanger (306) and the outlet of the fuel line; and
(ii) generating a control signal (CV1) to control operation of the first control valve (301) dependent on a comparison of the first fuel temperature (T1) with a target value (T1_{Target}) of the first fuel temperature (T1) and on a measure (mbfuel) of fuel flow through the pre-heater line (317).

11. A method according to claim 10 further comprising the steps of:
(a) measuring a first fuel pressure (P1) in the pre-heater line (312) between the inlet (318) thereof and the first control valve (301);
(b) measuring a second fuel pressure (P2) in the pre-heater line (317) between the first control valve (301) and the burner (305);
(c) measuring a first fuel temperature (T1) in the pre-heater line (312) between the inlet (318) thereof and the first control valve (301),
(d) deriving the measure (mbfuel) of fuel flow through the pre-heater line from the first and second fuel pressures (P1, P2) and the second fuel temperature (T2), optionally by using a first look-up table (401) that outputs the measure (mbfuel) of fuel flow through the pre-heater line dependent on the first and second fuel pressures (P1, P2), the first fuel temperature (T1) and the control signal (CV1).

12. A method according to claim 10 further comprising the step of using a mass flow meter (327) to measure a mass flow rate of fluid in the pre-heater line (317) to obtain the measure (mbfuel) of fuel flow through the pre-heater line.

13. A method according to any of claims 10 to 12, wherein the step (ii) of generating the control signal (CV1) comprises the steps of:
(1) generating the comparison by determining a first difference between the first fuel temperature (T1) and the target value (T1_{Target}) of the first fuel temperature and generating a first signal corresponding to the first difference;
(2) generating a second signal corresponding to the measure (mbfuel) of fuel flow through the pre-heater line; and
(3) generating the control signal (CV1) by determining a second difference between the first and second signals.

14. A method according to any of claims 10 to 12, wherein the hydrogen fuel delivery system (300) further comprises an electrical heater (309) in the pre-heater line (317) between the inlet (318) thereof and either the burner (305) or the first control valve, the electrical heater (309) receiving a heater current (I_heater) to heat fuel in the pre-heater line (317), and wherein the method further comprises the step of controlling the heater current (I_heater) dependent on the measure (mbfuel) of fuel flow through the pre-heater line.

15. A method according to any preceding claim wherein the hydrogen fuel delivery system comprises a second control valve disposed in the fuel line between the outlet thereof the heat exchanger and wherein the method further comprises the step of controlling the second control valve.

## Patentansprüche

1. Wasserstoffbrennstoffzufuhrsystem (300), umfassend:
eine Brennstoffleitung (312) mit einem Einlass (315) und einem Auslass (316);
eine Flüssigbrennstoffpumpe (307), die konfiguriert ist, um einen Strom von flüssigem Wasserstoffbrennstoff aus einem Wasserstoffbrennstoff-Speichertank (308) zum Einlass (315) der Brennstoffleitung bereitzustellen;
einen Wärmetauscher (306) mit einem ersten und einem zweiten Fluidweg (313, 314), wobei die Brennstoffleitung (312) den ersten Fluidweg (313) einschließt; und
eine Vorheizerleitung (317) mit einem Einlass (318), der mit der Brennstoffleitung (312) zwischen dem Einlass (315) davon und dem Wärmetauscher (306) verbunden ist, wobei die Vorheizerleitung (317) ein erstes Steuerventil (301) und einen Brenner (305) zwischen dem Einlass (318) der Vorheizerleitung und dem Wärmetauscher (306) umfasst, wobei die Vorheizerleitung (317) den zweiten Fluidweg (314) des Wärmetauschers (306) in Richtung eines Vorheizerleitungsauslasses (319) einschließt und das erste Steuerventil in der Vorheizerleitung zwischen dem Einlass davon und dem Brenner angeordnet ist;
**dadurch gekennzeichnet, dass** das Wasserstoffbrennstoffzufuhrsystem ferner Folgendes umfasst
einen ersten Temperatursensor (321), der konfiguriert ist, um eine erste Brennstofftemperatur (T1) in der Brennstoffleitung (312) zwischen dem Wärmetauscher (306) und dem Auslass der Brennstoffleitung zu messen; und
ein Steuersystem (400), das konfiguriert ist, ein Steuersignal (CV1) bereitzustellen, um den Betrieb des ersten Steuerventils (301) in Abhängigkeit von einem Vergleich der ersten Brennstofftemperatur (T1) mit einem Sollwert (T1_{Target}) der ersten Brennstofftemperatur und einem Messwert (mbfuel) des Brennstoffdurchflusses durch die Vorheizerleitung (317) zu steuern.

2. Wasserstoffbrennstoffzufuhrsystem (300) gemäß Anspruch 1, umfassend:
einen ersten Drucksensor (318), der konfiguriert ist, um einen ersten Brennstoffdruck (P1) in der Vorheizerleitung (312) zwischen dem Einlass (318) davon und dem ersten Steuerventil (301) zu messen;
einen zweiten Drucksensor (319), der konfiguriert ist, um einen zweiten Brennstoffdruck (P2) in der Vorheizerleitung (317) zwischen dem ersten Steuerventil (301) und dem Brenner (305) zu messen; und
einen zweiten Temperatursensor (321), der konfiguriert ist, um eine zweite Brennstofftemperatur (T2) in der Vorheizerleitung (312) zwischen dem Einlass (318) davon und dem ersten Steuerventil (301) zu messen,
wobei das Steuersystem (400) konfiguriert ist, um den Messwert (mbfuel) des Brennstoffdurchflusses aus dem ersten und zweiten Brennstoffdruck (P1, P2) und der zweiten Brennstofftemperatur (T2) abzuleiten, und optional eine erste Nachschlagetabelle (401) umfasst, die zu Folgendem konfiguriert ist
Ausgeben des Messwertes (mbfuel) des Brennstoffdurchflusses in Abhängigkeit von dem ersten und zweiten Brennstoffdruck (P1, P2), der ersten Brennstofftemperatur (T1) und dem Steuersignal (CV1).

3. Wasserstoffbrennstoffzufuhrsystem (300) gemäß Anspruch 1, umfassend einen Massendurchflussmesser (327), der konfiguriert ist, um eine Massendurchflussmenge des Fluids in der Vorheizerleitung (317) zu messen und einen entsprechenden Messwert des Brennstoffdurchflusses (mbfuel) durch die Vorheizerleitung an das Steuersystem (400) bereitzustellen.

4. Wasserstoffbrennstoffzufuhrsystem (300) gemäß einem vorhergehenden Anspruch, wobei das Steuersystem (400) einen ersten Steuerkreis (402) und einen zweiten Steuerkreis (403) umfasst, wobei der erste Steuerkreis (402) angeordnet ist, um den Messwert (mbfuel) des Brennstoffdurchflusses durch die Vorheizerleitung und eine Ausgabe von dem zweiten Steuerkreis (403) zu empfangen und das Steuersignal (CV1) auszugeben, und wobei der zweite Steuerkreis (403) angeordnet ist, um den Sollwert (T1_{Target}) der ersten Brennstofftemperatur und die erste Brennstofftemperatur (T1) zu empfangen und die Ausgabe des zweiten Steuerkreises an den ersten Steuerkreis (402) bereitzustellen.

5. Wasserstoffbrennstoffzufuhrsystem (300) gemäß Anspruch 4, wobei:
(a) der erste Steuerkreis (402) konfiguriert ist, um eine erste Differenz zwischen dem Messwert (mbfuel) des Brennstoffdurchflusses durch die Vorheizerleitung und der Ausgabe des zweiten Steuerkreises (403) zu bestimmen und das Steuersignal (CV1) auszugeben; und/oder
(b) die zweite Steuerkreis (403) konfiguriert ist, um eine zweite Differenz zwischen der ersten Brennstofftemperatur (T1) und dem Sollwert (T1_{Target}) der ersten Brennstofftemperatur zu bestimmen und die Ausgabe des zweiten Steuerkreises an den ersten Steuerkreis (402) bereitzustellen.

6. Wasserstoffbrennstoffzufuhrsystem (300) gemäß einem vorhergehenden Anspruch, ferner umfassend einen elektrischen Heizer (309) in der Vorheizerleitung (317) zwischen dem Einlass (318) davon und dem Brenner (305), wobei der elektrische Heizer (309) konfiguriert ist, um einen Heizerstrom (l_heater) zu empfangen, um Brennstoff in der Vorheizerleitung (317) zu erwärmen.

7. Wasserstoffbrennstoffzufuhrsystem (300) gemäß Anspruch 6, wobei:
(a) der elektrische Heizer (309) zwischen dem Einlass (318) der Vorheizerleitung und dem ersten Steuerventil (301) eingerichtet ist; und/oder
(b) das Steuersystem (400) konfiguriert ist, um den Heizerstrom (l_heater) in Abhängigkeit von dem Messwert (mbfuel) des Brennstoffdurchflusses durch die Vorheizerleitung zu steuern, und
optional eine zweite Nachschlagetabelle (404) umfasst, die konfiguriert ist, um den Messwert (mbfuel) des Brennstoffdurchflusses durch die Vorheizleitung zu empfangen und den Heizerstrom (l_heater) auszugeben.

8. Wasserstoffbrennstoffzufuhrsystem (300) gemäß einem vorhergehenden Anspruch, wobei das Steuersystem (400) ferner eine dritte Nachschlagetabelle (405) umfasst, die konfiguriert ist, um einen Messwert der Drehzahl (Np) der Flüssigbrennstoffpumpe (307), einen Druck (P5) des Brennstoffs am Auslass (315) der Pumpe, die erste Brennstofftemperatur (T1) und den Sollwert (T1_{Target}) der ersten Brennstofftemperatur zu empfangen und ein Vorwärtsregelsignal (FFPrBFuel) an den ersten Steuerkreis (402) bereitzustellen.

9. Wasserstoffbrennstoffzufuhrsystem gemäß einem vorhergehenden Anspruch, ferner umfassend ein zweites Steuerventil (302), das in der Brennstoffleitung zwischen dem Wärmetauscher und dem Auslass der Brennstoffleitung eingerichtet ist, und wobei der erste Temperatursensor angeordnet ist, um die erste Brennstofftemperatur (T1) in der Brennstoffleitung zwischen dem Wärmetauscher und dem zweiten Steuerventil zu messen.

10. Verfahren zum Betreiben eines Wasserstoffbrennstoffzufuhrsystems (300), welches Folgendes umfasst:
eine Brennstoffleitung (312) mit einem Einlass (315) und einem Auslass (316);
eine Flüssigbrennstoffpumpe (307), die konfiguriert ist, um einen Strom von flüssigem Wasserstoffbrennstoff aus einem Wasserstoffbrennstoff-Speichertank (308) zum Einlass (315) der Brennstoffleitung bereitzustellen;
einen Wärmetauscher (306) mit einem ersten und einem zweiten Fluidweg (313, 314), wobei die Brennstoffleitung (312) den ersten Fluidweg (313) einschließt; und
eine Vorheizerleitung (317) mit einem Einlass (318), der mit der Brennstoffleitung (312) zwischen dem Einlass (315) davon und dem Wärmetauscher (306) verbunden ist, wobei die Vorheizerleitung (317) ein erstes Steuerventil (301) und einen Brenner (305) zwischen dem Einlass (318) der Vorheizerleitung und dem Wärmetauscher (306) umfasst, wobei die Vorheizerleitung (317) den zweiten Fluidweg (314) des Wärmetauschers (306) in Richtung eines Vorheizerleitungsauslasses (319) einschließt und das erste Steuerventil in der Vorheizerleitung zwischen dem Einlass davon und dem Brenner angeordnet ist;
**gekennzeichnet durch** die folgenden Schritte:
(i) Messen einer ersten Brennstofftemperatur (T1) in der Brennstoffleitung (312) zwischen dem Wärmetauscher (306) und dem Auslass der Brennstoffleitung; und
(ii) Erzeugen eines Steuersignals (CV1), um den Betrieb des ersten Steuerventils (301) in Abhängigkeit von einem Vergleich der ersten Brennstofftemperatur (T1) mit einem Sollwert (T1_{Target}) der ersten Brennstofftemperatur (T1) und einem Messwert (mbfuel) des Brennstoffdurchflusses durch die Vorheizerleitung (317) zu steuern.

11. Verfahren gemäß Anspruch 10, ferner umfassend die Schritte:
(a) Messen eines ersten Brennstoffdrucks (P1) in der Vorheizerleitung (312) zwischen dem Einlass (318) davon und dem ersten Steuerventil (301);
(b) Messen eines zweiten Brennstoffdrucks (P2) in der Vorheizerleitung (317) zwischen dem ersten Steuerventil (301) und dem Brenner (305);
(c) Messen einer ersten Brennstofftemperatur (T1) in der Vorheizerleitung (312) zwischen dem Einlass (318) davon und dem ersten Steuerventil (301),
(d) Ableiten des Messwertes (mbfuel) des Brennstoffdurchflusses durch die Vorheizerleitung aus dem ersten und zweiten Brennstoffdruck (P1, P2) und der zweiten Brennstofftemperatur (T2), optional unter Verwendung einer ersten Nachschlagetabelle (401), die den Messwert (mbfuel) des Brennstoffdurchflusses durch die Vorheizerleitung in Abhängigkeit von dem ersten und zweiten Brennstoffdruck (P1, P2), der ersten Brennstofftemperatur (T1) und dem Steuersignal (CV1) ausgibt.

12. Verfahren gemäß Anspruch 10, ferner umfassend den Schritt des Verwendens eines Massendurchflussmessers (327), um eine Massendurchflussmenge von Fluid in der Vorheizerleitung (317) zu messen, um den Messwert (mbfuel) des Brennstoffdurchflusses durch die Vorheizerleitung zu erhalten.

13. Verfahren gemäß einem der Ansprüche 10 bis 12, wobei der Schritt (ii) des Erzeugens des Steuersignals (CV1) die folgenden Schritte umfasst:
(1) Erzeugen des Vergleichs durch Bestimmen einer ersten Differenz zwischen der ersten Brennstofftemperatur (T1) und dem Sollwert (T1_{Target}) der ersten Brennstofftemperatur und Erzeugen eines ersten Signals, das der ersten Differenz entspricht;
(2) Erzeugen eines zweiten Signals entsprechend dem Messwert (mbfuel) des Brennstoffdurchflusses durch die Vorheizerleitung; und
(3) Erzeugen des Steuersignals (CV1) durch Bestimmen einer zweiten Differenz zwischen dem ersten und dem zweiten Signal.

14. Verfahren gemäß einem der Ansprüche 10 bis 12, wobei das Wasserstoffbrennstoffzufuhrsystem (300) ferner einen elektrischen Heizer (309) in der Vorheizerleitung (317) zwischen dem Einlass (318) davon und entweder dem Brenner (305) oder dem ersten Steuerventil umfasst, wobei der elektrische Heizer (309) einen Heizerstrom (l_heater) empfängt, um Brennstoff in der Vorheizerleitung (317) zu erwärmen, und wobei das Verfahren ferner den Schritt des Steuerns des Heizerstroms (l_heater) in Abhängigkeit von dem Messwert (mbfuel) des Brennstoffdurchflusses durch die Vorheizerleitung umfasst.

15. Verfahren gemäß einem vorhergehenden Anspruch, wobei das Wasserstoffbrennstoffzufuhrsystem ein zweites Steuerventil umfasst, das in der Brennstoffleitung zwischen deren Auslass und dem Wärmetauscher eingerichtet ist, und wobei das Verfahren ferner den Schritt des Steuerns des zweiten Steuerventils umfasst.

## Revendications

1. Système de distribution de carburant hydrogène (300) comprenant :
une conduite de carburant (312) ayant une entrée (315) et une sortie (316) ;
une pompe à carburant liquide (307) conçue pour fournir un écoulement de carburant hydrogène liquide depuis un réservoir de stockage de carburant hydrogène (308) à l'entrée (315) de la conduite de carburant ;
un échangeur de chaleur (306) ayant des premier et second trajets de fluide (313, 314), la conduite de carburant (312) comprenant le premier trajet de fluide (313) ; et
une conduite de préchauffage (317) ayant une entrée (318) connectée à la conduite de carburant (312) entre l'entrée (315) de celle-ci et l'échangeur de chaleur (306), la conduite de préchauffage (317) comprenant une première vanne de commande (301) et un brûleur (305) entre l'entrée (318) de la conduite de préchauffage et l'échangeur de chaleur (306), la conduite de préchauffage (317) comprenant le second trajet de fluide (314) de l'échangeur de chaleur (306) vers une sortie de conduite de préchauffage (319) et la première vanne de commande étant disposée dans la conduite de préchauffage entre l'entrée de celle-ci et le brûleur ;
**caractérisé en ce que** le système de distribution de carburant hydrogène comprend en outre
un premier capteur de température (321) conçu pour mesurer une première température de carburant (T1) dans la conduite de carburant (312) entre l'échangeur de chaleur (306) et la sortie de la conduite de carburant ; et
un système de commande (400) configuré pour fournir un signal de commande (CV1) pour commander le fonctionnement de la première vanne de commande (301) en fonction d'une comparaison de la première température de carburant (T1) à une valeur cible (T1_{Cible}) de la première température de carburant et en fonction d'une mesure (mbcarburant) du débit de carburant traversant la conduite de préchauffage (317).

2. Système de distribution de carburant hydrogène (300) selon la revendication 1, comprenant :
un premier capteur de pression (318) conçu pour mesurer une première pression de carburant (P1) dans la conduite de préchauffage (312) entre l'entrée (318) de celle-ci et la première vanne de commande (301) ;
un second capteur de pression (319) conçu pour mesurer une deuxième pression de carburant (P2) dans la conduite de préchauffage (317) entre la première vanne de commande (301) et le brûleur (305) ; et
un second capteur de température (321) conçu pour mesurer une deuxième température de carburant (T2) dans la conduite de préchauffage (312) entre l'entrée (318) de celle-ci et la première vanne de commande (301),
dans lequel le système de commande (400) est configuré pour dériver la mesure (mbcarburant) du débit de carburant à partir des première et deuxième pressions de carburant (P1, P2) et de la deuxième température de carburant (T2) et comprend éventuellement une première table de correspondance (401) configurée pour sortir la mesure (mbcarburant) du débit de carburant en fonction des première et deuxième pressions de carburant (P1, P2), de la première température de carburant (T1) et du signal de commande (CV1).

3. Système de distribution de carburant hydrogène (300) selon la revendication 1, comprenant un débitmètre massique (327) conçu pour mesurer un débit massique de fluide dans la conduite de préchauffage (317) et fournir une mesure correspondante du débit de carburant (mbcarburant) traversant la conduite de préchauffage au système de commande (400).

4. Système de distribution de carburant hydrogène (300) selon l'une quelconque des revendications précédentes, dans lequel le système de commande (400) comprend une première boucle de commande (402) et une deuxième boucle de commande (403), la première boucle de commande (402) étant agencée pour recevoir la mesure (mbcarburant) du débit de carburant traversant la conduite de préchauffage et une sortie de la deuxième boucle de commande (403) et pour sortir le signal de commande (CV1), et la deuxième boucle de commande (403) étant agencée pour recevoir la valeur cible (T1_{Cible}) de la première température de carburant et la première température de carburant (T1) et pour fournir la sortie de la deuxième boucle de commande à la première boucle de commande (402).

5. Système de distribution de carburant hydrogène (300) selon la revendication 4, dans lequel :
(a) la première boucle de commande (402) est configurée pour déterminer une première différence entre la mesure (mbcarburant) du débit de carburant traversant la conduite de préchauffage et la sortie de la deuxième boucle de commande (403) et pour sortir le signal de commande (CV1) ; et/ou
(b) la deuxième boucle de commande (403) est configurée pour déterminer une deuxième différence entre la première température de carburant (T1) et la valeur cible (T1_{Cible}) de la première température de carburant et pour fournir la sortie de la deuxième boucle de commande à la première boucle de commande (402).

6. Système de distribution de carburant hydrogène (300) selon l'une quelconque des revendications précédentes, comprenant en outre un chauffage électrique (309) dans la conduite de préchauffage (317) entre l'entrée (318) de celle-ci et le brûleur (305), le chauffage électrique (309) étant conçu pour recevoir un courant de chauffage (l_chauffage) pour chauffer le carburant dans la conduite de préchauffage (317).

7. Système de distribution de carburant hydrogène (300) selon la revendication 6, dans lequel :
(a) le chauffage électrique (309) est disposé entre l'entrée (318) de la conduite de préchauffage et la première vanne de commande (301) ; et/ou
(b) le système de commande (400) est configuré pour commander le courant de chauffage (l_chauffage) en fonction de la mesure (mbcarburant) du débit de carburant traversant la conduite de préchauffage et
comprend éventuellement une deuxième table de correspondance (404) configurée pour recevoir la mesure (mbcarburant) du débit de carburant traversant la conduite de préchauffage et pour sortir le courant de chauffage (l_chauffage).

8. Système de distribution de carburant hydrogène (300) selon l'une quelconque des revendications précédentes, dans lequel le système de commande (400) comprend en outre une troisième table de correspondance (405) conçue pour recevoir une mesure de la vitesse (Np) de la pompe à carburant liquide (307), une pression (P5) du carburant à la sortie (315) de la pompe, la première température de carburant (T1) et la valeur cible (T1_{Cible}) de la première température de carburant et pour fournir un signal de commande d'avance (FFPrBCarburant) à la première boucle de commande (402).

9. Système de distribution de carburant hydrogène selon l'une quelconque des revendications précédentes, comprenant en outre une seconde vanne de commande (302) disposée dans la conduite de carburant entre l'échangeur de chaleur et la sortie de la conduite de carburant et dans lequel le premier capteur de température est agencé pour mesurer la première température de carburant (T1) dans la conduite de carburant entre l'échangeur de chaleur et la seconde vanne de commande.

10. Procédé de fonctionnement d'un système de distribution de carburant hydrogène (300) qui comprend :
une conduite de carburant (312) ayant une entrée (315) et une sortie (316) ;
une pompe à carburant liquide (307) conçue pour fournir un écoulement de carburant hydrogène liquide depuis un réservoir de stockage de carburant hydrogène (308) à l'entrée (315) de la conduite de carburant ;
un échangeur de chaleur (306) ayant des premier et second trajets de fluide (313, 314), la conduite de carburant (312) comprenant le premier trajet de fluide (313) ; et
une conduite de préchauffage (317) ayant une entrée (318) connectée à la conduite de carburant (312) entre l'entrée (315) de celle-ci et l'échangeur de chaleur (306), la conduite de préchauffage (317) comprenant une première vanne de commande (301) et un brûleur (305) entre l'entrée (318) de la conduite de préchauffage et l'échangeur de chaleur (306), la conduite de préchauffage (317) comprenant le second trajet de fluide (314) de l'échangeur de chaleur (306) vers une sortie de conduite de préchauffage (319) et la première vanne de commande étant disposée dans la conduite de préchauffage entre l'entrée de celle-ci et le brûleur ;
**caractérisé par** les étapes de :
(i) mesure d'une première température de carburant (T1) dans la conduite de carburant (312) entre l'échangeur de chaleur (306) et la sortie de la conduite de carburant ; et
(ii) génération d'un signal de commande (CV1) pour commander le fonctionnement de la première vanne de commande (301) en fonction d'une comparaison de la première température de carburant (T1) à une valeur cible (T1_{Cible}) de la première température de carburant (T1) et en fonction d'une mesure (mbcarburant) du débit de carburant traversant la conduite de préchauffage (317).

11. Procédé selon la revendication 10, comprenant en outre les étapes de :
(a) mesure d'une première pression de carburant (P1) dans la conduite de préchauffage (312) entre l'entrée (318) de celle-ci et la première vanne de commande (301) ;
(b) mesure d'une deuxième pression de carburant (P2) dans la conduite de préchauffage (317) entre la première vanne de commande (301) et le brûleur (305) ;
(c) mesure d'une première température de carburant (T1) dans la conduite de préchauffage (312) entre l'entrée (318) de celle-ci et la première vanne de commande (301),
(d) dérivation de la mesure (mbcarburant) du débit de carburant traversant la conduite de préchauffage à partir des première et deuxième pressions de carburant (P1, P2) et de la deuxième température de carburant (T2), éventuellement en utilisant une première table de correspondance (401) qui sort la mesure (mbcarburant) du débit de carburant traversant la conduite de préchauffage en fonction des première et deuxième pressions de carburant (P1, P2), de la première température de carburant (T1) et du signal de commande (CV1).

12. Procédé selon la revendication 10, comprenant en outre l'étape d'utilisation d'un débitmètre massique (327) pour mesurer un débit massique de fluide dans la conduite de préchauffage (317) pour obtenir la mesure (mbcarburant) du débit de carburant traversant la conduite de préchauffage.

13. Procédé selon l'une quelconque des revendications 10 à 12, dans lequel l'étape (ii) de génération du signal de commande (CV1) comprend les étapes de :
(1) génération de la comparaison en déterminant une première différence entre la première température de carburant (T1) et la valeur cible (T1_{Cible}) de la première température de carburant et génération d'un premier signal correspondant à la première différence ;
(2) génération d'un deuxième signal correspondant à la mesure (mbcarburant) du débit de carburant traversant la conduite de préchauffage ; et
(3) génération du signal de commande (CV1) en déterminant une deuxième différence entre les premier et deuxième signaux.

14. Procédé selon l'une quelconque des revendications 10 à 12, dans lequel le système de distribution de carburant hydrogène (300) comprend en outre un chauffage électrique (309) dans la conduite de préchauffage (317) entre l'entrée (318) de celle-ci et soit le brûleur (305) soit la première vanne de commande, le chauffage électrique (309) recevant un courant de chauffage (l_chauffage) pour chauffer le carburant dans la conduite de préchauffage (317), et dans lequel le procédé comprend en outre l'étape de commande du courant de chauffage (l_chauffage) en fonction de la mesure (mbcarburant) du débit de carburant traversant la conduite de préchauffage.

15. Procédé selon l'une quelconque des revendications précédentes, dans lequel le système de distribution de carburant hydrogène comprend une seconde vanne de commande disposée dans la conduite de carburant entre la sortie de celle-ci et l'échangeur de chaleur et dans lequel le procédé comprend en outre l'étape de commande de la seconde vanne de commande.
